# EUROPEAN PATENT APPLICATION

(11) **EP 2 546 754 A1**
(43) Date of publication of application: **16.01.2013**
(21) Application number: 12161103.2
(22) Date of filing: 23.03.2012
(51) Int. Cl.: G06F 13/16

(54) **Memory control device and method**

(30) Priority: 14.07.2011 KR 20110069836; 31.08.2011 KR 20110088086
(71) Applicant: Samsung Electronics Co., Ltd., Suwon-si, Gyeonggi-do, 443-742 (KR)
(72) Inventor: Kim, Ji-min, Korea (KR); Seo, Yoon-bum, Korea (KR)
(74) Representative: Robinson, Ian Michael

(57) **Abstract**

A memory control device is provided. The memory control device includes a plurality of memories, a plurality of host control units which are connected to the plurality of memories, respectively, and a synchronization unit which collectively performs a data read or data write operation for the plurality of memories through the plurality of host control units. Accordingly, it is possible to simultaneously perform a data read or data write operation for a plurality of memory cards by simultaneously controlling the plurality of memory cards which perform the data read or data write operation at different points in time.

## Description

### CROSS-REFERENCE TO RELATED APPLICATION

This application claims priority from Korean Patent Application Nos. 10-2011-0069836, filed on July 14, 2011 and 10-2011-0088086, filed on August 31, 2011, in the Korean Intellectual Property Office.

### BACKGROUND

### 1. Field

Apparatuses and methods consistent with exemplary embodiments relate to a memory control device and method, and more particularly, to a memory control device and a method capable of controlling a plurality of memories simultaneously.

### 2. Description of the Related Art

In general, memory devices such as a multimedia card (MMC) are widely used in data storage devices of apparatuses such as smart phones, cameras, MP3 players, or the like. The memory devices are combined with external apparatuses such as computers through system buses and perform data communication according to a preset communication protocol.

The MMC includes 8 to 9 communication signals CLK, DATAO to DATA 7, and H/W reset as an interface. The lines CMD and DATA are CMD lines through which a command is transmitted and a response corresponding to the command is received. The line DATA is fixed in 8 bits and may transmit 1-bit, 4-bit or 8-bit data according to a user's selection.

A process of accessing a memory card will be described when the memory card is combined a host such as a computer. First, the host checks an operable voltage range of the memory card through CMD1 to access the memory card. At this time, the host notifies the memory card of a voltage range supported by CMD1. When supporting the voltage range, the memory card notifies the host of a card operation voltage and performs a response. Thus, the memory card enters a stand-by state and the host checks which number of slots are in the memory card.

Next, the host transmits CMD2 (Sends Card ID) to memory cards and the memory cards which receive CMD2 transmit identification information to the host. The host recognizes the number of memory cards connected thereto and assigns an identification number to each memory card. Thereby, the memory cards connected to the host enter a stand-by state and only one of the memory cards entered into the stand-by state is selected and used through CMD7 (Select/Deselect Card)

In the related art, when the host is connected to a plurality of memory cards, to perform a data read operation or a data write operation for the plurality of memory cards connected the host, an operation of another memory card may be performed after an operation of a memory card selected through CMD7 is performed. That is, since the plurality of memory cards connected to the host do not have the same operation timing for data processing, the data read operation or the data write operation for the plurality of memory cards may not be performed simultaneously.

### SUMMARY

One or more exemplary embodiments may overcome the above disadvantages and other disadvantages not described above. However, it is understood that one or more exemplary embodiment are not required to overcome the disadvantages described above, and may not overcome any of the problems described above.

One or more exemplary embodiment provide a memory control device and a method which controls a plurality of memory cards which perform a data read or data write operation at different points of time throughout synchronization, thereby performing the data read or data write operation for the plurality of memory cards simultaneously. Further, one or more exemplary embodiments provide a memory control device and method which process large amounts of data only using a data bit of existing memory cards without expanding data bit widths of the memory cards.

According to the present invention there is provided an apparatus and method as set forth in the appended claims. Other features of the invention will be apparent from the dependent claims, and the description which follows. According to an aspect of an exemplary embodiment, there is provided a memory control device which may include: a plurality of memories, a plurality of host control units which are connected to the plurality of memories, respectively, and a synchronization unit which collectively performs a data read or data write operation for the plurality of memories throughout the plurality of host control units.

The synchronization unit may include a master controller which collects a data read from the plurality of memories by the plurality of host control units and transmits collected data to an external apparatus when performing the data read operation.

When performing the data write operation, if data to be written in the plurality of memories is input, the master controller may divide input data and transmit divided data to the plurality of host control units.

The plurality of host control units may include a plurality of registers which are individually set by the master controller, and a plurality of direct memory access (DMA) controllers which perform the data read or data write operation for the plurality of memories connected thereto according to setting values of the plurality of resisters.

The synchronization unit may further include a slave controller which simultaneously controls the plurality of registers to simultaneously perform the data write operation for the plurality of memories. The plurality of DMA controllers may require simultaneous data writes to the master controller according to the setting values of the plurality of registers simultaneously set by a control command of the slave controller.

The plurality of memories, the plurality of host control units, and the synchronization unit may be integrated within a single chip.

The plurality of memories may include at least one selected from the group consisting of a multimedia card (MMC), a secure digital (SD) card, and a nonvolatile memory.

According to an aspect of another exemplary embodiment, there is provided a memory control method of a memory control device including a plurality of memories. The method may include: setting a plurality of host control units connected to the plurality of memories, respectively to an operation mode for a data read according to a data read control command for the plurality of memories, receiving data stored in the plurality of memories and read by the plurality of host control units according to a setting of the operation mode for data read, and when all the data reads by the plurality of host control units are received, collecting received data to one data and transmitting the one data to an external apparatus.

Each of the plurality of host control units may include a register and a direct memory access (DMA) controller which performs a data read or data write operation for the plurality of memories according to a setting value of the register.

The method may further include setting the register connected to each of the plurality of memories to an operation mode for a data write according to a data write control command for the plurality of memories, inputting data to be written in the plurality of memories from the external apparatus according to data write requests of the plurality of host control units in which the operation mode for a data write is set, and dividing input data and providing divided data to the plurality of host control units to store the input data in the plurality of memories.

The setting to the operation mode for a data write may include simultaneously setting the registers connected to each of the plurality of memories to the operation mode for data write according to a data write simultaneous control command for the plurality of memories.

The plurality of memories may include at least one selected from the group of consisting of a MMC, an SD card, and a nonvolatile memory.

Additional aspects and advantages of the exemplary embodiments will be set forth in the detailed description, will be obvious from the detailed description, or may be learned by practicing the exemplary embodiments.

### BRIEF DESCRIPTION OF THE DRAWING FIGURES

The above and/or other aspects will be more apparent by describing in detail exemplary embodiments, with reference to the accompanying drawings, in which:

FIG. 1 is a block diagram illustrating a conventional memory device;

FIG. 2 is a block diagram illustrating a memory control device according to an exemplary embodiment;

FIG. 3 is a timing diagram illustrating a point of time in which first and second host control units transmit data read request information or data write request information according to an exemplary embodiment;

FIG. 4 is a flowchart illustrating a memory control method according to a data read operation in a memory control device including a plurality of memories according to an exemplary embodiment; and

FIG. 5 is a flowchart illustrating a memory control method according to a data write operation in a memory control device including a plurality of memories according to an exemplary embodiment.

### DETAILED DESCRIPTION OF THE EXEMPLARY EMBODIMENTS

Hereinafter, exemplary embodiments will be described in greater detail with reference to the accompanying drawings.

In the following description, same reference numerals are used for the same elements when they are depicted in different drawings. The matters illustrated in the description, such as detailed construction and elements, are provided to assist in a comprehensive understanding of the exemplary embodiments. Thus, it is apparent that the exemplary embodiments can be carried out without those specifically illustrated matters. Also, functions or elements known in the related art are not described in detail since they would obscure the exemplary embodiments with unnecessary detail.

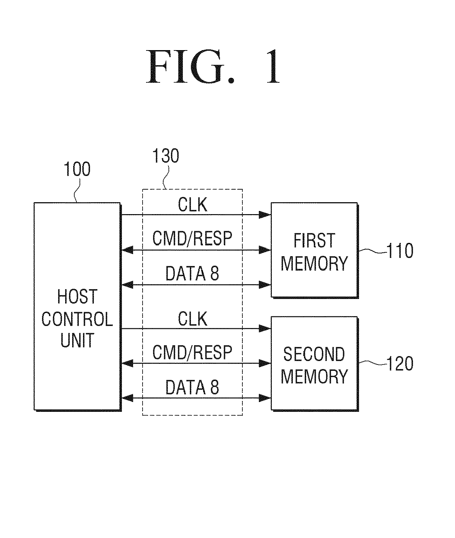

FIG. 1 is a block diagram of a conventional memory device.

As shown in FIG. 1, the memory device includes a host control unit 100 and a plurality of multimedia cards (hereinafter, referred to as memories) 110 and 120. The host control unit 100 which uses a MMC or SD protocol is connected to the memories 110 and 120 through a system bus 130. The memories 110 and 120 which are connected to the host control unit 100 through the system bus 130 performs a read operation of data stored therein or performs a write operation of data which is stored in an external apparatus to be stored therein according to a control command of the host control unit 100.

Each of the memories 110 and 120 performs the operation through a card identification mode and a data transfer mode. Specifically, on the card identification mode operation, the host control unit 100 requests a card identification (CID) number to each of the first and second memories 110 and 120. The first and second memories 110 and 120 may transmit response information to the host control unit 100 in response to a request of the CID number. A memory of the first and second memories 110 and 120 which can transmit the response information and which has successfully transmitted the response information to the host control unit 100, is assigned a relative card address (RCA) from the host control unit 100.

According to exemplary embodiments, when the first memory 110 has successfully transmitted the response information to the host control unit 100, the first memory 100 is assigned the RCA from the host control unit 100. When the RCA is assigned to the first memory 110, the first memory 110 enters a data transfer mode from the CID mode. The first memory 110 which is entering the data transfer mode has one of a stand-by state, a transfer state, a sending data state, a receive data state, and a programming state in the data transfer mode.

In general, the first memory which is assigned an RCA and enters the data transfer mode may perform an operation required by the host control unit 100 according to a control command (for example, a write command) of the host control unit 100 in the transfer state. When the first memory 110 performs an operation such as data write according to the control command of the host control unit 100, the second memory 120 is in a stand-by state. That is, the host control unit 110 cannot order a control command such as a write command to the second memory 120 until the write operation of the first memory 110 in which the operation such as a write operation is controlled by the host control unit 100.

That is, after the operation of the first memory 110 is entirely completed according to the control command of the host control unit 100, the host control unit 100 may control an operation of the second memory 120. Therefore, the data read or the data write for the first and second memories 110 and 120 cannot be simultaneously performed. The operation of the memory control device in the related art has been schematically described until now. Hereinafter, a memory control device according to the inventive concept which improves the problems of the above-described memory control device of the related art will be described in detail.

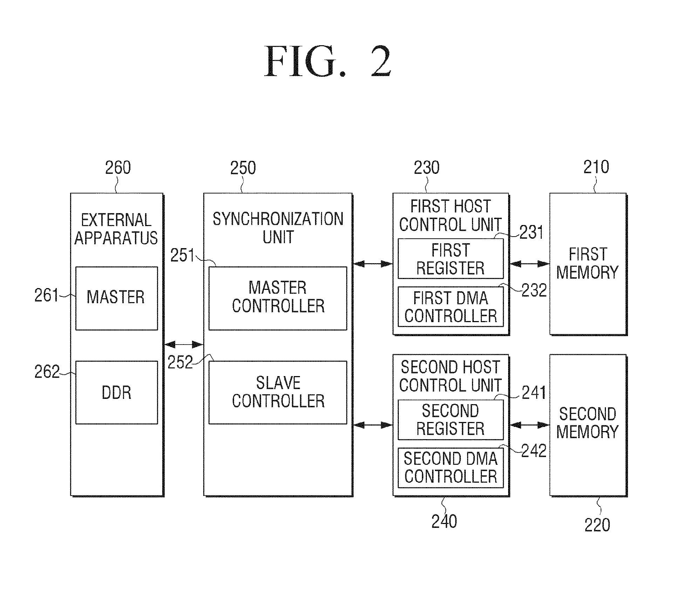

FIG. 2 is a block diagram of a memory control device according to an exemplary embodiment.

As shown in FIG. 2, the memory control device according to an exemplary embodiment includes first and second memories 210 and 220, first and second host control units 230 and 240, a synchronization unit 250, and an external apparatus 260. In the exemplary embodiment, two memories and two host control units have been illustrated, but the inventive concept is not limited thereto and may include a plurality of memories and a plurality of host control units corresponding to the respective m memories.

The first and second memories 210 and 220 is may be general low-priced data storage devices which are fabricated not in a portable type, but in an embedded type and is used in a smart phone, a camera, a personal digital assistant (PDA), a digital recorder, an MP3 player, and the like. A memory used in the data storage device may be one selected from the group consisting of a MMC, a SD card, a nonvolatile memory (NVM), and the like.

The first and second host control units 230 and 240 are connected to the first and second memories 210 and 220, respectively and control the first and second memories 210 and 220 to perform an operation of reading data stored in the first and second memories 210 and 220 or an operation of writing data in the first and second memories 210 and 220. The first and second memories 210 and 220 are connected to the first and second host control units 230 and 240 through an interface and transmit and receive information for data read or data write through total 8 to 9 communication signals CLK, CMD, DATAO to DATA7, and H/W reset.

The synchronization unit 250 collectively performs a data read or data write operation for the first and second memories 210 and 220 connected to the first and second host control units 230 and 240 through the first and second host control units 230 and 240. More specifically, when all data read request information are received from the first and second host control units 230 and 240, the synchronization unit 250 receives data related to the data read request information from the first and second control units 230 and 240. That is, the first and second host control units 230 and 240 request data to be transmitted to the external apparatus to the first and second memories 210 and 220 connected thereto. Thus, the first and second memories 210 and 220 transmit required data to the first and second host control units 230 and 240 connected thereto and the first and second host control units 230 and 240 transmit data received from the first and second memories 230 and 240 to the synchronization unit 250. The synchronization unit 250 collects the data received from the first and second host control units 230 and 240 and transmits the collected data to the external apparatus 260, thereby transmitting the data of the first and second memories 210 and 220 to the external apparatus 260 simultaneously.

On the other hand, when all data write request information is received from the first and second host control units 230 and 240, the synchronization unit 250 transmits the data write request information received from the first and second host control units 230 and 240 to the external apparatus 260. Thereby, the external apparatus 260 transmits data corresponding to the data write request information received from the synchronization unit 250 to the synchronization unit 250. The synchronization unit 250 receives data stored in the external apparatus 260, divides the received data, and transmits the divided data to the first and second host control units 230 and 240 connected to the first and second memories 210 and 220, so that each divided data is stored in each of the first and second memories 210 and 220.

According to exemplary embodiments, when data of 128 bits is received from the external apparatus 260, the synchronization unit 250 divides the received data of 128 bits into data of 64 bits, and transmits data of upper 64 bits to the first host control unit 230 connected to the first memory 210 and data of lower 64 bits to the second host control unit 240 connected to the second memory 220, according to the preset condition. Therefore, the first memory 210 and the second memory 220 receive and store the data stored in the external apparatus simultaneously.

Each of components of the memory control device has been schematically described till now. Hereinafter, detailed description of each component of the memory control device which controls the first and second memories 210 and 220 to perform an operation for data read or data write simultaneously will be made.

The first and second host control units 230 and 240, which are connected to the first and second memories 210 and 220, respectively and control the data read or data write operation of the first and second memories 210 and 220, may be implanted through first and second registers 231 and 241 and first and second DMA controllers 232 and 242. The first and second registers 231 and 241 are set by the synchronization unit 250 and transmit a command for data read or data write to the first and second memories 210 and 220 and receive response message according to the command.

According to an exemplary embodiment, when the data read operation is performed, the first and second registers 231 and 241 transmit operation command information for the data read to the first and second memories 210 and 220 connected to the first and second host control units 230 and 240 through an interface. That is, the first and second registers 210 and 220 transmit the operation command information for the data read to the first and second memories 210 and 220 so as to transmit data to a master 261 of the external apparatus 260. The first and second memories 210 and 220 which receive the operation command information for the data read from the first and second registers 231 and 241 transmit response messages according to the operation command information to the first and second registers 231 and 241.

According to another embodiment, when the data write operation is performed, the first and second registers 231 and 241 transmit operation command information for the data write to the first and second memories 210 and 220 connected to the first and second host control units 230 and 240 through an interface. That is, the first and second registers 231 and 241 transmit operation command information for the data write to store data stored in a double data rate synchronous dynamic random access memory (Hereinafter, referred to as DDR) 262 of the external apparatus 260 in the first and second memories 210 and 220. The first and second memories 210 and 220 which receive the operation command information for the data write from the first and second registers 231 and 241 transmit response messages corresponding to the operation command information to the first and second registers 231 and 241.

Thus, the first and second registers 231 and 241 may set an operation for reading data stored in the first and second memories 210 and 220 or an operation for writing data to the first and second memories 210 and 220.

When an operation for reading the data stored in the first and second memories 210 and 220 or writing the data to the first and second memories 210 and 220 by the first and second registers 231 and 241 is set, the first and second DMA controllers 232 and 242 may perform an operation of data read or data write for the first and second memories 210 and 220 by setting values according to a setting operation of the data read or data write for the first and second memories 210 and 220. Therefore, the first and second DMA controllers 232 and 242 may transmit data read from the first and second memories 210 and 220 to the synchronization unit 250 or receive data, which is received from the DDR 262 of the external apparatus 260 and divided, from the synchronization unit 250 and record and store the received data in the first and second memories 210 and 220.

On the other hand, the above-described synchronization unit 250 may be controlled to transmit data stored in the first and second memories 210 and 220 to the external apparatus 260 through the master controller 251 or to divide data input from the external apparatus 260 and store divided data in the first and second memories 210 and 220.

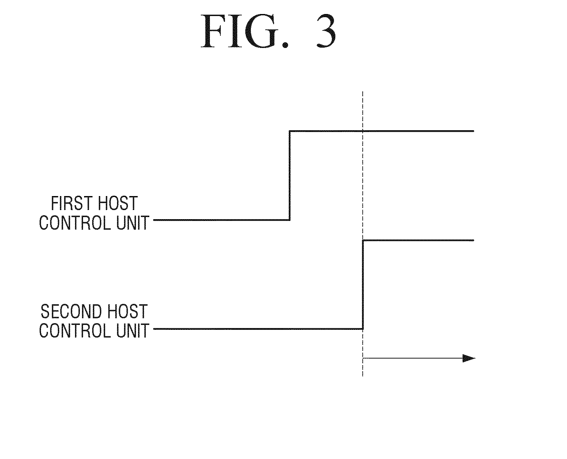

Specifically, when the master controller 251 performs a data read operation, the first and second host control units 230 and 240 collect data read from the first and second memories 210 and 220 and transmit the collected data to the external apparatus 260. Specifically, so as to perform reading of data stored in the first and second memories 210 and 220 through the master 261 of the external apparatus 260, the first and second host control units 230 and 240 transmit data read request information to the master controller 251. When all the data read request information are received from the first and second host control units 230 and 240, the master controller 251 performs synchronization for data read from the first and second memories 210 and 220 by the first and second host control units 230 and 240 and collects the synchronized data as one data. More specifically, as shown in FIG. 3, the first and second host control units 230 and 240 transmit the data read request information to the master controller 251 at different points of time.

FIG. 3 is a timing diagram illustrating a point of time in which the first and second host control units transmit data read request information or data write request information according to an exemplary embodiment.

As shown in FIG. 3, the first host control unit 230 and the second host control unit 240 transmit the data read request information or the data write request information to the master controller 251 so as to perform a data read or data write for the first and second memories 210 and 220. At this time, the data read request information or the data write request information is transmitted from the first and second host control units 230 and 240 to the master controller 251 at different points of time. As shown in FIG. 3, the data read request information or the data write request information of the first host control unit 230 is first transmitted to the master controller 251 and the data read request information or the data write request information of the second host control unit 240 is transmitted to the master controller 251 after a constant time has elapsed.

Since the data read request information from the first control unit 230 and the data read request information from the second control unit 240 are transmitted at different points of time, the master controller 251 performs synchronization to transmit data of the first memory 210 read by the first host control unit 230 and data of the second memory 220 read by the second host control unit 240 to the external apparatus 260 simultaneously. Therefore, the master controller 251 collects data of the first and second memories 210 and 220 read by the first and second host control units 230 and 240 as one data at a point of time in which the data read request information is received in the host control unit 240 and transmits the one data to the external apparatus 260. Therefore, the master 261 of the external apparatus 260 may read data stored in the first memory 210 and data stored in the second memory 220 simultaneously.

On the other hand, when the master controller 251 performs a data write operation, if data to be recorded in the first and second memories 210 and 220 is input, the master controller 251 divides the input data and transmits the divided data to the first and second host control units 230 and 240. Specifically, when all data write request information is received from the first and second host control units 230 and 240, the master controller 251 transmits the data write request information received from the first and second host control units 230 and 240 to the DDR 262 of the external apparatus 260.

As described above, the data write request information transmitted from the first host control unit 230 to the master controller 251 and the data write request information transmitted from the second host control unit 240 to the master controller 251 are transmitted at different points of time. As shown in FIG. 3, the data write request information of the first host control unit 230 is first transmitted to the master controller 251 and the data write request information of the second host control unit 240 is transmitted to the master controller 251 after a constant time has elapsed.

Since the data write request information from the first host control unit 230 and the data write request information from the second host control unit 240 are transmitted at different points of time, the master controller 251 performs synchronization to transmit data received from the first host control unit 230 and data received from the second host control unit 240 to the DDR 262 of the external apparatus 260. Therefore, as shown in FIG. 3, the master controller 251 transmits the data write request information to the DDR 262 of the external apparatus 260 at the point of time in which the data write request information is received in the second host control unit 240.

When data required from the DDR 262 which receives the data write request information is received, the master controller 251 divides the received data according to the preset condition and transmits the divided data to the first and second host control units 230 and 240.

According to exemplary embodiments, the master controller 251 receives data of 128 bits from the DDR 262 and divides the received data of 128 bits into data of 64 bits. Next, the master controller 251 transmits data of upper 64 bits to the first host control unit 230 according to the preset condition. The master controller 251 transmits data of lower 64 bits to the second host control unit 240.

The first and second host control units 230 and 240 which receive the data of upper 64 bits and the data of lower 64 bits through the master controller 251 request to perform a data write operation to the first and second memories 210 and 220 connected to the first and second host control units 230 and 240 through the first and second DMA controllers 232 and 242. Thereby, the first and second memories 210 and 220 perform the data write operation for the data of upper 64 bits and the data of lower 64 bits received from the first and second host control units 230 and 240. Therefore, the data stored in the DDR 262 of the external apparatus 260 may be stored in the first and second memories 210 and 220.

According to other exemplary embodiments, the synchronization unit 250 may transmit the data write request information to the DDR 262 of the external apparatus 260 without separate synchronization. The synchronization unit 250 may be implemented through a slave controller 252. The salve controller 252 simultaneously controls the first and second registers 231 and 241 of the first and second host control units 230 and 240 to perform the data write operation for the first and second memories 210 and 220 simultaneously.

According to a control command of the slave controller 252, the first and second registers 231 and 241 perform a setting for the data write simultaneously. Thereby, the first and second host control units 230 and 240 may transmit the data write request information to the master controller 251 through the first and second DMA controllers 232 and 242 simultaneously. According to the control command of the slave controller 252, the master controller 251 may transmit the data write request information to the DDR 262 of the external apparatus 260 without performing separate synchronization by simultaneously receiving the data write request information from the first host control unit 230 and the data write request information from the second host control unit 240. It is preferable to integrate the first and second memories 210 and 220, the first and second host control units 230 and 240, and the synchronization unit 250 within a single chip.

Till now, each component of the memory control device according to the inventive concept has been illustrated. Hereinafter, a method of controlling a memory control device to perform data read or data write of a plurality of memories will be described in detail.

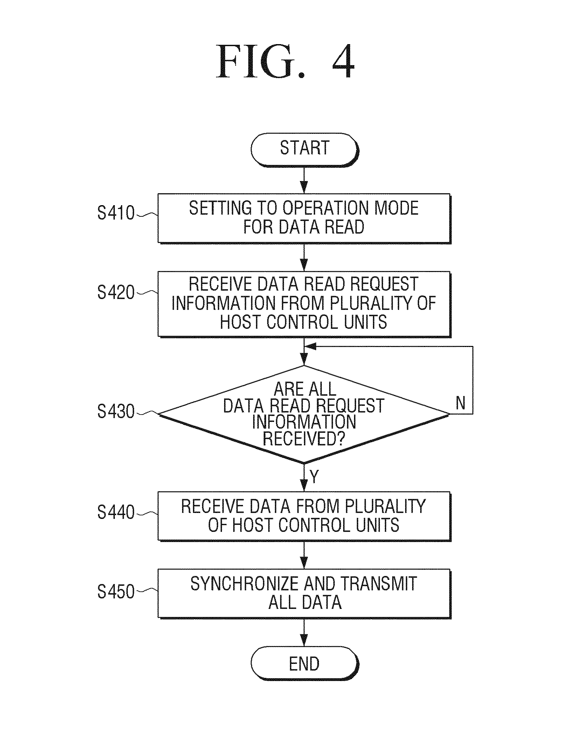

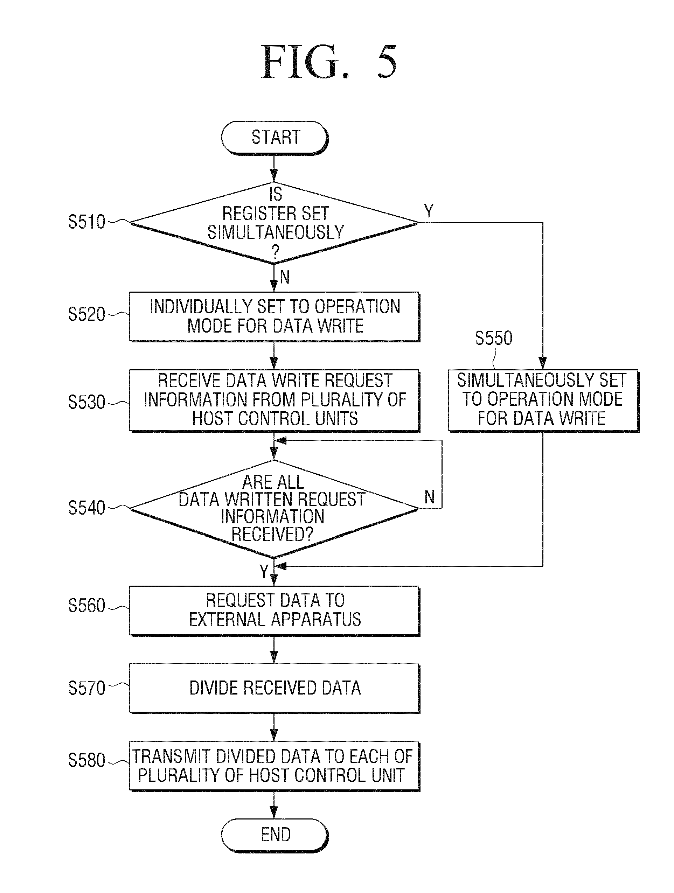

Before a detailed description of a method of controlling memories in a memory control device is made, the memory control device may include a plurality of memories (Hereinafter, referred to as first and second memories) and control the first and second memories according to data read or data write for the first and second memories as follows. In FIG. 4, a memory control method for a data read operation in the memory control device including the first and second memories will be described in detail. In FIG. 5, a memory control method for a data write operation to the first and second memories in the memory control device will be described in detail.

FIG. 4 is a flowchart illustrating a memory control method for a data read operation in a memory control device including a plurality of memories according to an exemplary embodiment.

As shown in FIG. 4, when a data read operation for first and second memories starts, the memory control device sets a plurality of host control units (Hereinafter, referred to as first and second host control units) connected to the first and second memories to an operation mode for a data read (S410). Next, the memory control device receives data read request information from the first and second host control units according to setting the operation mode for the data read (S420). Here, the first and second memories may be general low-priced data storage devices which are fabricated not in a portable type, but in an embedded type and used in a smart phone, a camera, a PDA, a digital recorder, an MP3 player, and the like. The memory used in the devices may be one selected from the group consisting of a MMC, a SD card, and a nonvolatile memory.

When the data read operation for the first and second memories starts, the memory control device inputs data read request information for reading data stored in the first and second memories from the first and second host control units. According to inputting the data read request information from the first and second host control units, the memory control device checks whether or not all data read request information is input from the first and second host control units (S430).

When all the data read request information is input from the first and second host control units as a result of checking, the memory control device inputs data of the first memory connected to the first host control unit and data of the second memory connected to the second host control unit. That is, when all the data read request information are input from the first and second host control units, the memory device receives the data read from the first and second memories by the first and second host control units (S440). As described above, the first and second host control units are connected to the first and second memories, respectively and include registers (Hereinafter, referred to as first and second registers), and DMA controllers (Hereinafter, referred to as first and second DMA controllers) which perform a data read or data write operation for the first and second memories connected to the first and second host control units according to setting values of the first and second registers.

Therefore, the first and second DMA controllers of the first and second host control units may perform a data read for the first and second memories according to the setting values for the data read of the first and second registers. When the data read for the first and second memories is performed through the first and second DMA controllers, the first and second host control units transmit the data read from the first and second memories through the first and second DMA controllers to the memory control device. When all data recorded and stored in the first and second memories is received from the first and second host control units, the memory control device synchronizes the received data, collects the synchronized data as one data, and transmits the collected data to the external apparatus (S450).

On the other hand, the data read request information transmitted from the first host control unit to the memory control device and the data read request information transmitted from the second host control unit to the memory control device are transmitted at different points of time. As described in FIG. 3, the data read request information of the first host control unit may be first transmitted to the memory control device and then the data read request information of the second host control unit may be transmitted. Since the data read request information from the first host control unit and the data read request information from the second host control unit are transmitted at different points of time, it is impossible to transmit the data of the first and second memories received from the first and second host control units to the external apparatus simultaneously. Therefore, the memory control device performs synchronization to transmit the data of the first and second memories to the external apparatus simultaneously. That is, the memory control device collects the data of the first and second memories received from the first and second host control units, at the point of time in which the data read request information is received from the second host control unit which transmits the data read request information later than the first host control unit, as one data and transmits the collected data to the external apparatus.

Therefore, the memory control device may transmit the data stored in the first and second memories to the external apparatus simultaneously. Till now, the memory control method of controlling the plurality of memories according to the data read operation for the plurality of memories in the memory control device has been illustrated in detail. Hereinafter, a memory control method of controlling a plurality of memories according to a data write operation for the plurality of memories in a memory control device will be described in detail with reference to FIG. 5.

FIG. 5 is a flowchart illustrating a memory control method according to a data write operation in a memory control device including a plurality of memories according to an exemplary embodiment.

As shown in FIG. 5, when a data write operation for the first and second memories starts, the memory control device checks whether or not to set the registers included in the first and second host control units to an operation mode for a simultaneous data write (S510). When the setting registers are not set to a simultaneous data write as a result of checking the registers, the memory control device individually sets the registers included in the first and second host control units to the operation mode for data write through the master controller (S520). When set to the operation mode for a data write, the memory control device receives data write request information from the first and second host control units (S530).

As described above, the first and second host control units are connected to the first and second memories, respectively and include the registers and DMA controllers which perform a data read or data write operation for the first and second memories connected to the first host control units according to setting values of the registers. Therefore, the first and second DMA controllers of the first and second host control units may perform a data write for the first and second memories according to the setting values for a data write of the first and second registers and record and store data stored in DDR of the external apparatus according to performing a data write.

Specifically, the first and second host control units transmit the data write request information to the memory control device to record and store data pre-stored in the DDR of the external apparatus in the first and second memories. When the data write request information from the first and second host control units are received, the memory control device checks whether or not all the data write request information are received from the first and second host control units (S540).

Specifically, as shown in FIG. 3, the data write request information of the first host control unit may be first transmitted to the memory control device and then the data write request information of the second host control unit may be transmitted to the memory control device. Since the data write request information from the first host control unit and the data write request information from the second host control unit are transmitted at different points of time, the memory control device cannot transmit the data write request information to the first and second memories received from the first and second host control units to the DDR of the external apparatus simultaneously. Therefore, the memory control device checks whether or not all the data write request information is received from the first and second host control units.

When all the data write request information is received from the first and second host control units as a checking result, the memory control device may request to write data stored in the DDR of the external apparatus by transmitting the data write request information received from the first and second host control units to the external apparatus through the master controller (S560).

On the other hand, when simultaneously setting the registers as a result of checking in step S510, the memory control device simultaneously sets the first and second registers of the first and second host control units to the operation mode for a data write to perform the data write operation for the first and second memories through the slave controller simultaneously (S550). According to the simultaneous control command of the slave controller, the first and second registers may be set to the operation mode for a data write simultaneously. Therefore, the first and second host control units transmit the data write request information to the memory control device simultaneously. Next, when the data write request information are simultaneously received from the first and second host control units, the memory control device transmits the data write request information to the external apparatus through the master controller via step S550.

The memory control device which transmits the data write request information receives data corresponding to the data write request information from the DDR of the external apparatus. When the data corresponding to the data write request information is received from the DDR of the external apparatus, the memory control device divides the received data according to the preset condition (S570) and transmits the divided data to the first and second host control units (S580).

According to exemplary embodiments, when data of 128 bits stored in the DDR of the external apparatus is received with respect to the data write request information, the memory control device divides the data of 128 bits into data of 64 bits. Next, the memory control device transmits data of upper 64 bits to the first host control unit and data of lower 64 bits to the second host control unit, according to the preset condition. The first and second host control units which receive the data of upper 64 bits and the data of lower 64 bits, respectively request to store the data in the first and second memories connected thereto. Thereby, the first and second memories store the data of 64 bits received from the first and second host control units, respectively. The data stored in the DDR of the external apparatus may be recorded and stored in the first and second memories simultaneously.

Till now, the exemplary embodiments of the inventive concept have been mainly described.

The foregoing although a few preferred embodiments have been shown and described, it will be appreciated by those skilled in the art that various changes and modifications might be made without departing from the scope of the invention, as defined in the appended claims.

## Claims

1. A memory control device, comprising:
a plurality of memories;
a plurality of host control units respectively connected to the plurality of memories, and
a synchronization unit which collectively performs a data read or a data write operation to the plurality of memories through the plurality of host control units.

2. The memory control device as claimed in claim 1, wherein the synchronization unit comprises a master controller which collects data read from the plurality of memories by the plurality of host control units and transmits collected data to an external apparatus when the data read operation is performed.

3. The memory control device as claimed in claim 2, wherein when data to be written in the plurality of memories is input, the master controller divides input data and transmits divided data to the plurality of host control units when performing the data write operation.

4. The memory control device as claimed in claim 3, wherein the plurality of host control units comprise a plurality of registers which are individually set by the master controller, and a plurality of direct memory access (DMA) controllers which perform the data read or data write operation for the plurality of memories connected thereto according to setting values of the plurality of registers.

5. The memory control device as claimed in claim 4, wherein the synchronization unit further comprises a slave controller which simultaneously controls the plurality of registers to simultaneously perform the data write operation to the plurality of memories,
wherein the plurality of DMA controllers require simultaneous data write to the master controller according to the setting values of the plurality of registers simultaneously set by a control command of the slave controller.

6. The memory control device as claimed in any one of claim 1 to 5, wherein the plurality of memories, the plurality of host control units, and the synchronization unit are integrated within a single chip.

7. The memory control device as claimed in any one of claim 1 to 5, wherein the plurality of memories include at least one selected from the group consisting of a multimedia card (MMC), a secure digital (SD) card, and a nonvolatile memory.

8. A memory control method of a memory control device including a plurality of memories, the method comprising:
setting a plurality of host control units respectively connected to the plurality of memories, to an operation mode for data read according to a data read control command for the plurality of memories;
receiving data stored in the plurality of memories and read by the plurality of host control units according to setting of the operation mode for data read; and
when each of the data read by the plurality of host control units is received, collecting received data to one data and transmitting the one data to an external apparatus.

9. The method as claimed in claim 8, wherein each of the plurality of host control units includes a register and a direct memory access (DMA) controller which performs a data read or data write operation for the plurality of memories according to a setting value of the register.

10. The method as claimed in claim 9, further comprising:
setting the register connected to each of the plurality of memories to an operation mode for data write according to a data write control command for the plurality of memories;
inputting data to be written in the plurality of memories from the external apparatus according to data write requests of the plurality of host control units in which the operation mode for data write is set; and
dividing input data and providing divided data to the plurality of host control units to store the input data in the plurality of memories.

11. The method as claimed in claim 10, wherein the setting to the operation mode for data write includes simultaneously setting the register connected to each of the plurality of memories to the operation mode for data write according to a data write simultaneous control command for the plurality of memories.

12. The method as claimed as in any one of claim 8 to 11, wherein the plurality of memories include at least one selected from the group of consisting of a multimedia card (MMC), a secure digital (SD) card, and a nonvolatile memory.

13. A memory control device comprising:
a plurality of host control units; and
a synchronization unit which simultaneously performs a data read operation or a data write operation to a plurality of memories through the plurality of host control units.

14. The memory control device as claimed in claim 13, wherein the synchronization unit comprises a master controller which collects data read from the plurality of host control units and transmits collected data to an external apparatus when the data read operation is performed.

15. The memory control device as claimed in claim 14, wherein when data to be written is input, the master controller divides input data and transmits the divided input data to the plurality of host control units when performing the data write operation.
